# EUROPEAN PATENT APPLICATION

(11) **EP 4 553 562 A1**
(43) Date of publication of application: **14.05.2025**
(21) Application number: 23306942.6
(22) Date of filing: 09.11.2023
(51) Int. Cl.: G02B 27/01, G02C 7/08, G02C 7/10, G02C 11/00, G06F 3/01

(54) **DEVICES AND METHOD FOR FAVOURING A VISUAL SYSTEM CAPACITY IN FUNCTION OF EXTERNAL CONDITIONS**

(71) Applicant: Essilor International, 94220 Charenton-Le-Pont (FR)
(72) Inventor: GOURRAUD, Alexandre, 94120 FONTENAY SOUS BOIS (FR); GILBERT, Cedric, 92160 Antony (FR); BOUCHIER, Aude, 31000 Toulouse (FR)
(74) Representative: Korakis-Ménager, Sophie

(57) **Abstract**

A visual system capacity of a wearer of an smart eyewear including at least one functionality is favoured, by receiving distance data (30) on one or more distances between a part of the smart eyewear and one or more material surfaces located in one or more directions from the wearer, determining from the distance data, actuation data (50) adapted to set one or more parameters of the functionalities so as to favour the visual system capacity of the wearer, and providing the actuation data for those parameters to be set. A type (33) of a current environment of the wearer is derived from the distance data and the actuation data are determined from that environment type.

Applications to automatic setting of smart smart eyewear functions, notably to echromic smart eyewear.

## Description

### Technical Field

The invention relates to the domain of visual system capacity and regards more particularly smart eyewears.

### Background information And Prior Art

In the context of this disclosure, ***"Smart eyewear"*** designates any head mountable device intended to provide a function, such as notably lens tinting, lens variable power, determination of gaze direction, audio, image display, environment monitoring, or health monitoring. Head mounted device can include for example any eyewear, eyeglasses, mask, goggle and headset. For example, electrochromic smart eyewear, or its abbreviated form ***"echromic smart eyewear",*** refers to smart eyewear provided with an automatic mode adjusting a level of lens tint in function of an amount of light measured at eye level.

Echromic smart eyewear may be particularly suited for favouring visibility in too luminous environments by mitigating or neutralizing prejudicial effects of dazzling light, while avoiding to unduly darken wearer vision.

Smart eyewear can also be applied to the control of lighting conditions, particularly indoors, e.g. for facilitating the synchronization of the circadian rhythm. The latter regulates the sleep-wake cycle and may have various health impacts, notably via sleep quality.

In other known technologies, smart eyewear is exploited for correcting a wearer behaviour, which may be helpful notably for slowing down child myopia progression, decreasing visual fatigue or enhancing vision conditions. For example, in patent application WO 2015/059566 to Essilor International, a behavioural profile of a child is evaluated in various situations in which spectacles are used for a given period of time. The spectacles may be notably provided with sensors suited to measuring a luminance of a working plane or working distances, e.g. from the glasses to a document or a screen. They also include warning means, e.g. an alarm to the wearer of the spectacles or a transmitter for sending messages to an operator, automatically activated in prejudicial situations, e.g. too close reading or writing distances or too low luminance of the working plane.

Further smart eyewear achievements, among multiple wearable devices, are described in patent application WO 2018/184072 to Brien Holden Vision Institute for slowing myopia progression. They can encompass notably the presence of sensors arranged to measure intensity of light incoming towards the considered wearable device, a spectral composition of such incoming light, movements of the wearer, a distance between the wearable device and objects of fixation, or a dioptric map of the visual field (depth sensor). In particular, the environment type of the wearer, i.e. indoor or outdoor setting, can be inferred from light level and spectral composition analysis, while working distances can be deduced from a proximity sensor or a depth sensor. Actuators are also provided for changing a property of the wearable device (e.g. a focal length) or for triggering an alert in function of a behavioural profile of the wearer, based on information received from the sensors. Such information can notably include amounts of time spent indoors or outdoors, or wearer focus on near or far objects.

Smart eyewear thus offers a broad range of opportunities for enhancing, preserving or protecting a vision capacity of a wearer, in real-time as well as in the long term.

In this respect, context differentiation offers attractive advantages by enabling adaptation of smart eyewear functionalities in function of the environment, for example in generating warnings in case of excessive indoor presence, as seen above.

Identifying the type of wearer environment may in fact offer multiple further attractive applications for smart eyewear. This includes notably triggering or not an automatic tinting mode depending on whether the wearer is outdoors or indoors. Such a distinction may avoid tinting lenses at home or in an office, which is generally useless (because attention is usually focused inside rather than outside) and may convey a potentially strong negative social message.

However, identifying the wearer environment by existing technologies is defeated in multiple situations. In particular, when exploiting light analysis, the presence of windows and their heterogeneous filtering properties when indoors, the potential light content ambiguities in small spaces such as e.g. cars or buses, the variable outdoor wavelength composition depending on the hour and season and on weather, and the presence of outside objects such as e.g. walls or trees, tend to skew the results and to prevent correct environment recognition. Though more sophisticated solutions may be developed, such as taking account of hour and weather, this remains subject to a potentially high failure rate.

Camera images associated with scene analysis could provide good discrimination, but such a solution is not suited to smart eyewear, notably due to technical costs for image processing, whether locally or through cloud computing, and to data privacy management.

Other technologies consist in relying on interacting environments provided with wireless communication capacities so as to directly inform smart eyewear components of the current environment type, which may involve the Internet of Things. Similarly, reading or writing devices such as e.g. smartphones, tablets or laptops may be provided with distance measurement capacities and communicate related information to smart eyewear with a view to proper lens adaptation or warning to wearer, taking possibly also account of the wearer environment.

Though such solutions can prove quite reliable and efficient in suited circumstances, they fully depend on the presence of proper equipment and on communication system compatibility, and are thus available only in particular restricted situations, involving specific material and/or facilities (e.g. at home).

In still other solutions, the smart eyewear may be provided with a user interface enabling the wearer to inform the smart eyewear of the type of surrounding environment, such as outdoors or indoors, either directly via e.g. vocal or gesture-based inputs, or indirectly through e.g. communications to the smart eyewear via a smartphone. By the same token, the wearer may indicate to the smart eyewear some particular ongoing actions, e.g. reading or writing, so that distance monitoring be suitably activated as mentioned above.

Such modes have the advantages of being straightforwardly executed and in basis versions, of not requiring complex mechanisms. On the other hand, they fully rely on the wearer's initiative and can be somehow tedious or embarrassing.

Consequently, technologies exist for adapting smart eyewear functionalities in function of external conditions, which include consideration of environment and/or of distances between the wearer eyes and working surfaces. However, the effectiveness of those solutions is hampered by the above drawbacks.

### Summary

A purpose of the present disclosure regards smart eyewear implementations taking account of external conditions in favouring a visual system capacity, in a potentially efficient way in a wide range of situations.

A further purpose of the disclosure is to facilitate identification of the wearer environment or recognition of the wearer context for smart s eyewear adaptations, providing alternatives to existing technologies and potentially enhancing identification reliability.

An additional purpose of the disclosure is to enable proper automatic setting of smart eyewear functions, potentially affording in favourable implementations a decrease in financial costs, power consumption, volume, surface, weight, data computations and/or data bandwidth.

Applications of the disclosure, directed to favouring the visual system capacity of the wearer, include in particular automatic adjustment or driving of lens tinting for echromic smart smart eyewear, electronic focus, augmented reality, data collection and display of warning messages. They notably include support to visual comfort, decreased visual fatigue, enhanced visual acuity, resynchronization of circadian rhythm, prevention or reduction of vision deterioration.

### Preliminary definitions

The definitions below complete the above in the context of the present disclosure.

A ***"wearer"*** is presently defined as a person or an animal having visual system capacities and wearing a smart eyewear, using the disclosed device or method as a patient or a subject.

A ***"visual system capacity"*** designates a physiological feature ability of the wearer, which pertains to the visual system. This may encompass any vision feature, such as notably visual acuity or refractive error, or any other capacity linked to the wearer visual system, such as notably the circadian rhythm.

***"Augmented reality**"* or AR refers to a combination of real world and computer-generated contents in an interactive experience. Those terms cover notably the addition of virtual objects to the real world (i.e. constructive combination), but also the concealing of real-world parts (i.e. destructive combination, such as by masking operations). They also encompass "mixed reality" or MR, in which the real-world environment and computer-generated contents are merged and can interact in real time.

***"Favouring"*** the visual system capacity means obtaining any physiological effect favourable to the visual system, which may include notably preventing, mitigating, reducing, or eliminating short-term or long-term prejudicial physiological effects. For example, this may consist in, or encompass, slowing down myopia, hyperopia or presbyopia progression, avoiding dazzling light, mitigating visual fatigue or discomfort, or contributing to resynchronizing the circadian rhythm. Favouring the visual system capacity may also include allowing the wearer to have a better or more suitable visibility, whether of real-world or of AR scenes.

***"Setting"*** a functionality parameter of a smart eyewear lens may consist in selecting, determining an on/off status, or adjusting a value of that parameter. Such setting may be repeated over time.

An *"**environment**"* of the wearer consists in external conditions constituting surroundings, i.e. conditions around the wearer. In this respect, the wearer environment does not refer to a mere object or set of objects placed in the vicinity of the wearer without forming such surroundings, such as e.g. a working surface. Accordingly, an environment type cannot be reduced to the presence of such objects in the wearer surroundings.

A ***"type"*** of an environment designates a set of environments sharing particular features. The existence of at least two types of environments is implied, but the nature and number of the types depends on an underlying representation. For example, the types may be reduced to "indoors" and "outdoors", or the environments may be distributed in a more granular way.

An ***"smart eyewear functionality"*** presently refers to one or more features of an smart eyewear enabling a visual system capacity of an smart eyewear wearer to be favoured via proper operation or adjustment of the feature(s). The functionality may notably be visual, acoustic and/or haptics. It may pertain to data recording and/or transmission. It may be incorporated into any part of the smart eyewear such as notably for example lenses, visor, frame, temples, bridge, hinges, rims, wires and/or nose pads. More precisely, if the smart eyewear includes one or more lenses, a ***"lens functionality"*** designates such feature(s) when associated with the lens(es). The lens functionality may notably be selected among light transmission properties of the lens(es) (intensity, wavelength content, optical power, spatial distribution, etc.), AR display property, AR content display and/or selective collection (e.g. on/off recording) of lens-related illumination data with a view to later exploitation in favouring the wearer visual system capacity (e.g. in increasing exposure to appropriate light for slowing down the progression of myopia).

The terms ***"adapted"*** and ***"configured"*** are used in the present disclosure as broadly encompassing initial configuration, later adaptation or complementation of the present device, or any combination thereof alike, whether effected through material or software means (including firmware).

The term ***"processor"*** should not be construed to hardware capable of executing software, and refers in a general way to a processing device, which can for example include a computer, a microprocessor, an integrated circuit, or a programmable logic device (PLD). Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM memory. Instructions may be notably stored in hardware, software, firmware or in any combination thereof.

### Objects of the disclosure

The disclosure concerns a device for favouring a visual system capacity of a wearer of an smart eyewear provided with at least one functionality. The device includes:
- at least one input adapted to receive distance data on one or more distance(s) between at least one part of the smart eyewear and one or more material surface(s) located in one or more direction(s) from the wearer,
- at least one processor configured for determining from the distance data, actuation data adapted to set one or more parameter(s) of the functionality/functionalities so as to favour the visual system capacity of the wearer,
- at least one output adapted to provide the actuation data for the parameter(s) of the functionality/functionalities to be set.

According to the disclosure, the processor(s) is/are configured for deriving a type of a current environment of the wearer from the distance data and for determining the actuation data from that environment type.

In this respect, the device relies on a combined triple role concentrated in the smart eyewear: measurement reference (i.e. distance smart eyewear-environment), adaptation (via associated functionality) and effect on the wearer's visual system (through functionality operations).

Also, by contrast with the above-mentioned technologies that exploit, on one hand, distance monitoring with respect to a reading, writing or working surface so as to provide corresponding recommendations to the wearer and, on the other hand, a specific method for recognizing the wearer environment (based on wavelength analysis, or on expressly received information), the present device makes use of distance data themselves for identifying the environment.

This would be quite surprising to a skilled person, for whom smart eyewear-related distance monitoring is known as suited to determining a position of an object in front of, and stared at by, the wearer but not to recognizing the wearer environment. This would be all the more unexpected by the skilled person since in existing smart eyewear solutions, environment identification is cumulated with distance monitoring for respectively distinct purposes, as e.g. disclosed in above-cited document WO 2018/184072.

The present device may overcome the limitations and uncertainties of wavelength-based environment recognition in a number of situations, in which light does not provide sufficiently reliable differentiation criteria. It may further work without requiring any specific wearer action or settled equipment in concerned premises or external locations.

In a first category of distance data processing, the direction(s) include(s) at least one upward direction.

Using distance data corresponding to an upward direction for favouring a visual system capacity of a wearer would surprise a skilled person, for whom the relevant direction associated with such an effect is the frontal one, e.g. when monitoring a distance to a working surface. However, the presence of a material surface in the upward direction(s) may prove decisive for determining the type of the wearer environment, which may for example rely on the presence or absence of a ceiling and if any, on its height.

By "upward direction", it is presently meant a direction included in an upper right circular cone having a vertical symmetry axis, the verticality of the symmetry axis being defined with respect to the wearer environment. The cone has a half-angle equal to at most 45°. In particular modes, the half-angle is respectively worth 45°, a value between 35° and 45°, between 25° and 35°, between 15° and 25°, and between 5° and 15°. In a special mode, the upward direction is vertical, or approximately vertical, which amounts to having the cone half-angle equal to, or close to, zero.

The vertical direction for the smart eyewear is defined as corresponding to the vertical direction for the wearer standing, holding head upright and properly wearing the smart eyewear, that vertical direction referring to the vertical axis of the wearer head (given by the intersection of the coronal and median planes of the wearer body). Namely, the vertical direction for the smart eyewear may not be vertical with respect to the environment if the wearer tilts the head, lies down, or removes the smart eyewear. It may even not be vertical with respect to the environment in some circumstances where the wearer stands with the head upright, e.g. on a sloped ground.

In particular implementations (hereinafter "simplified implementations"), the vertical direction of the smart eyewear is assimilated to the vertical direction with respect to the environment for targeting distance measurements in the upward direction. Such embodiments make possible a straightforward and unequivocal arrangement of distance sensor(s) within the smart eyewear. For reliable outcomes to be generated, the user is then expected to hold head upright with the smart eyewear properly worn, even though not necessarily standing but e.g. sitting, or to place the isolated smart eyewear in a proper corresponding orientation. In related specific modes, the smart eyewear is provided with one or more orientation sensor(s), e.g. a gyroscopic system, indicating whether the smart eyewear is correctly oriented for upward distance measurement. The measurement operations may then be activated only when the smart eyewear orientation is at least approximatively so within a predetermined margin of error, e.g. 10 % or 15 % relative offset between the vertical axes of the smart eyewear and of the environment, and/or may send a warning signal when it is not.

In other implementations, the smart eyewear is provided with multiple distance measurement sensors in respectively fixed directions with respect to the smart eyewear and with one or more orientation sensor(s) adapted to provide orientation data with respect to the environment. The device is then adapted to exploit the distance data in those fixed directions and the orientation data to infer the distance data in the upward direction(s). The latter may be based on extrapolations, e.g. by supposing that a ceiling is horizontal on the ground of one or more measurement items, or has a constant slope on the ground of two or more measurement items.

Such implementations are less constraining to the wearer than the simplified ones, subject to additional computational complexity and to suited collected data.

In still other implementations, the smart eyewear is provided with one or more orientation sensor(s), from which the vertical direction of the environment can be obtained, and with at least one distance measurement sensor having an adjustable orientation. The distance measurement direction(s) of the smart eyewear may then be automatically adjusted upwards, depending on the smart eyewear orientation and thus on the wearer head positioning.

Such implementations may provide more versatile working conditions than the simplified ones at the expense of additional material arrangement complexity.

In particular modes, the device is adapted to process distance data associated with at least two distinct items of the upward direction(s). For example, the device is configured for the upward directions to include two directions symmetric with respect to the vertical axis (i.e. same polar angle, 180° apart azimuthal angles, e.g. forwards and backwards, or to the right and to the left), three directions regularly distributed with a same tilt angle around the vertical axis (i.e. same polar angle, 120° apart azimuthal angles) and/or four directions regularly distributed with a same tilt angle around the vertical axis (i.e. same polar angle, successively 90° apart azimuthal angles). In other examples, which may be combined with the previous ones, the upward directions include directions in a same vertical half-plane (i.e. same azimuthal angle, two or more polar angles). The vertical axis may belong to those half-plane directions.

In a second category of distance data processing, which may be combined with the first category, the direction(s) include(s) at least two directions selected among a frontal direction and opposite lateral directions.

Namely, either the selected directions include the frontal direction and at least one of the lateral directions, or the selected directions include the opposite lateral directions.

Using distance data corresponding at least partly to a lateral direction for favouring a visual system capacity of a wearer would surprise a skilled person, for whom the relevant direction associated with such an effect is merely the frontal one. However, the presence of a material surface in the lateral direction(s) may prove decisive for determining the type of the wearer environment, which may for example rely on the presence or absence of a wall or of a door and its distance to the wearer. Exploiting two or more directions, including possibly the frontal one, is particularly interesting since potentially allowing reliable environment determination in numerous diverse situations.

By "frontal direction", it is presently meant a direction included in a right circular cone having a forward symmetry axis, defined with respect to the wearer and the wearer environment. More precisely, that forward axis is defined as corresponding to the wearer standing, holding head upright and watching forward (its direction is given by the intersection of the transverse and median planes of the wearer body). The cone has a half-angle equal to at most 45°. In particular modes, the half-angle is respectively worth 45°, a value between 35° and 45°, between 25° and 35°, between 15° and 25°, and between 5° and 15°. In a special mode, the frontal direction coincides exactly or approximately with the forward symmetry axis, which amounts to having the cone half-angle equal to, or close to, zero.

The forward axis is located in a horizontal plane, i.e. a plane perpendicular to the vertical axis. A "horizontal direction" with respect to the environment is further defined as corresponding to any frontal direction with respect to the environment, subject to a complete 360° rotation around the vertical axis.

The frontal direction for the smart eyewear is defined as corresponding to the frontal direction for the wearer normally wearing the smart eyewear while standing, holding head upright and watching forward in the wearer environment. Namely, the frontal direction for the smart eyewear may not be a horizontal direction with respect to the environment if the wearer notably tilts the head, lies down, or removes the smart eyewear. It may not be frontal with respect to the wearer if the latter turns the head or has not the smart eyewear properly put on.

By "lateral direction", it is presently meant a direction included in a right circular cone having a lateral symmetry axis, defined with respect to the wearer and the wearer environment. More precisely, such a lateral axis is defined as located in the horizontal plane and perpendicular to the forward axis with respect to the wearer standing, holding head upright and watching forward (its direction is given by the intersection of the transverse and coronal planes of the wearer body), and is a right or left lateral axis depending on whether it is oriented to the right or the left of the wearer. The cone has a half-angle equal to at most 45°. In particular modes, the half-angle is respectively worth 45°, a value between 35° and 45°, between 25° and 35°, between 15° and 25°, and between 5° and 15°. In a special mode, the lateral direction coincides exactly or approximately with the lateral symmetry axis, which amounts to having the cone half-angle equal to, or close to, zero.

The lateral directions are "opposite" insofar as one of them is directed to the right and the other to the left of the wearer.

In some implementations (hereinafter "simplified implementations"), the frontal or (right or left) lateral direction of the smart eyewear is respectively assimilated to the frontal or lateral direction with respect to the wearer and environment for targeting respective distance measurements in the frontal or lateral direction. Such implementations make possible a straightforward and unequivocal arrangement of distance sensor(s) within the smart eyewear. For reliable outcomes to be generated, the user is then expected to hold head upright with the smart eyewear properly worn, or to place the isolated smart eyewear in a proper corresponding orientation. It deserves noting that while a horizontal orientation is expected, the wearer head may be turned to the right or the left as desired without prejudice to the outcomes. In related particular modes, the smart eyewear is provided with one or more orientation sensor(s), e.g. a gyroscopic system, indicating whether the smart eyewear is correctly oriented for horizontal distance measurements. The measurement operations may then be activated only when the smart eyewear orientation is at least approximatively so within a predetermined margin of error, e.g. 10 % or 15 % relative offset between the forward or lateral axis of the smart eyewear and the horizontal plane of the environment, and/or may send a warning signal when it is not.

In other implementations, the smart eyewear is provided with multiple distance measurement sensors in respectively fixed directions with respect to the smart eyewear and with one or more orientation sensor(s) adapted to provide orientation data with respect to the environment. The device is then adapted to exploit the distance data in those fixed directions and the orientation data to infer the distance data in the frontal or lateral direction(s).

Such implementations are less constraining to the wearer than the simplified implementations, subject to additional computational complexity and to suited collected data.

In still other implementations, the smart eyewear is provided with one or more orientation sensor(s), from which the horizontal positioning in the environment can be obtained, and with at least one distance measurement sensor having an adjustable orientation. The distance measurement directions of the smart eyewear may then be automatically adjusted, depending on the smart eyewear orientation and thus on the wearer head positioning.

Such implementations may provide more versatile working conditions than the simplified implementations, at the expense of additional arrangement complexity.

In particular modes, the device is adapted to process distance data associated with at least two distinct items of any of the forward direction, right direction or left direction. For example, the device is configured for the frontal directions to include two directions symmetric with respect to the forward axis (i.e. same polar angle, 180° apart azimuthal angles, e.g. upwards and downwards, or to the right and to the left), three directions regularly distributed with a same tilt angle around the forward axis (i.e. same polar angle, 120° apart azimuthal angles) and/or four directions regularly distributed with a same tilt angle around the forward axis (i.e. same polar angle, successively 90° apart azimuthal angles). In other examples, which may be combined with the previous ones, the frontal directions include directions in a same half-plane delineated by the forward axis (i.e. same azimuthal angle, two or more polar angles). The forward axis may belong to those half-plane directions. Similar examples may be used likewise with the right or left lateral directions replacing the frontal directions.

Multiple items of distance data may be cumulatively obtained through movements of the wearer and/or the smart eyewear, so as to be jointly exploited for deriving the environment type. In particular, the wearer may move in the environment and/or turn the head.

In variants, which may be combined with the first category of distance data processing, the measurement directions include one or more frontal directions and no lateral directions with respect to the smart eyewear. The processor(s) is/are then configured for deriving the environment type from the distance data collected in multiple directions by rotation movements of the wearer or of the wearer head.

In particular implementations, the smart eyewear including at least one lens, the parameter(s) of the functionality/functionalities includes a transmittance level, a reflectance level, a polarization level, a wavelength filter level, an optical power, a spatial light distribution property, an AR visual property, an AR display content and/or a selective collection of lens-related illumination data, associated with the lens(es).

In some related modes, the input(s) is/are adapted to receive lens light data relevant to light received by the lens(es), and the actuation data are adapted to set the parameter(s) of the functionality/functionalities also in function of the lens light data.

As mentioned above, the environment type may notably be identified as indoors or outdoors.

In corresponding embodiments, the derived type of the current environment being selected among at least an indoor type and an outdoor type, the actuation data are adapted to have the parameter(s) set to a first parameter kind when the type is the outdoor type and to have the parameter(s) set to a second parameter kind when the type is the indoor type.

For example, with an echromic smart eyewear, the tint level may be fixed to clear state if indoors, and to classical automatic mode if outdoors.

The differentiation between the types of environments may be refined. Thus, in more specific implementations, the derived type of the current environment being selected among also a vehicle type, the actuation data are adapted to have the parameter(s) set to a third parameter kind when the type is the vehicle type.

Typically, an indoor situation, an outdoor situation and a vehicle situation may be reflected by respectively medium, large and small volumes, which should be differentiated from the distance data.

For example, with an echromic smart eyewear, the tint level may be fixed to clear state if indoors, and to classical automatic mode if outdoors or in a vehicle.

With such potential recognition of the indoor type, outdoor type and vehicle type, in particular modes, the input(s) is/are adapted to receive driving hints pointing to driving operations when the type of the current environment is identified as the vehicle type, and the processor(s) is/are configured for deriving a driving status of the wearer from the driving hints and for determining the actuation data also in function of the driving status.

The driving hints may notably include acceleration data, which may e.g. provide information on car movements and possibly also on wearer movements inside the car. For example, in an echromic case, automatic lens tinting may be activated for the outdoor type and for the vehicle type when the driving status indicates that the vehicle is travelling, but not for the indoor type and for the vehicle type when the driving status indicates that the vehicle has been stationary for more than five minutes.

In another example involving an echromic smart eyewear, the tint level may be fixed to clear state if indoors, to classical automatic mode if outdoors or if in a vehicle as a driver, and to strengthened automatic mode (e.g. lower degree of transmission than in the classical automatic mode, involving stronger eye protection) if in a vehicle as a passenger.

In some implementations, one of the environment types is acknowledged as unidentified, which may correspond to an "unknown" type.

In advantageous configurations, the actuation data are adapted to trigger at least one distance measurement suited to setting the parameter(s) of the functionality/functionalities.

Namely, a next measurement is based on outcomes of previous measurement(s) from which a first estimation of the environment type has been determined. Such implementations may enable enhanced reliability and/or precisions on the assessed environment type, while reducing energy consumption by providing for limited distance measurement operations and triggering further ones only when appropriate.

In some modes, in addition to environment recognition relying on distance measurement, the device is further provided with other environment identification functions, such as any of the above-mentioned solutions. This may prove useful for still enhancing the recognition capabilities of the device. Indeed, the rate of success in distance-based environment recognition by the present device may differ in function of the implementations, and be possibly weakened in particular modes (e.g. coarse implementation) or situations (e.g. presence of disturbing objects, unusual type of environment). In this respect, though potentially adding complexity and costs, combining distance-based recognition with one or more other technologies (sensor fusion) may increase reliability rate and/or broaden environment application scope.

Thus, in some implementations, the input(s) is/are adapted to receive wearer light data relevant to light received by at least part of the wearer and the processor(s) is/are configured for deriving the type of the current environment also from those wearer light data.

In particular implementations, which may be combined with the previous ones, the device is provided with an on-off function enabling wearer-controlled activation and deactivation of the distance-based environment recognition. This may be advantageous in terms of energy consumption (hence of running autonomy), privacy (by avoiding unwelcome measurements e.g. in a confidential place) and/or wearer comfort (by preventing unintended and embarrassing distance measurement operations). In more specific modes, such implementations are coupled with the above-mentioned environment identification directly obtained by user-entered information, so that the wearer may choose between deactivating environment identification, expressly giving the environment type, and let the device determine it by itself.

In some embodiments, in addition to deriving the type of the current environment and hence the actuation data from the distance data, the processor(s) of the present device is/are configured for receiving information on a distance to a working, reading or writing surface and for determining further actuation data from this information. In more specific modes, the distance data encompass environment-directed as well as object-directed information, and the processor(s) is/are configured for providing instructions or recommendations related to working, reading or writing wearer habits while taking account of the wearer environment.

Such multiple distance-related capacities of the device may then have versatile and/or combined uses, thereby reducing the need for additional technology and thus potentially complexity and costs.

In particular modes:
- the input(s) is/are adapted to receive motion data on motions of the wearer,
- the processor(s) is/are configured for determining from at least the motion data whether the type of the wearer's current environment is likely to change and for generating distance measurement instructions only if so,
- the output(s) is/are adapted to provide the distance measurement instructions for obtaining the distance data.

Such configurations make possible potentially substantial savings in energy consumption, by enabling selective triggering of the distance measurement operations.

In addition, the disclosure concerns an smart eyewear for favouring a visual system capacity of a wearer of the smart eyewear. The smart eyewear is provided with at least one functionality and includes:
- at least one lens,
- at least one sensor adapted to assess one or more distance(s) between at least one part of the smart eyewear and one or more material surface(s) located in one or more direction(s) from the wearer,
- at least one actuator adapted to set one or more parameter(s) of the functionality/functionalities,
- a device for favouring the visual system capacity by receiving, from the sensor(s), data representative of the distance(s) as distance data and by providing the actuator(s) with actuation data depending on the distance data for setting the parameter(s) of the functionality/functionalities so as to favour the visual system capacity of the wearer.

According to the disclosure, the device for favouring the visual system capacity is compliant with any of the above-mentioned modes.

In particular embodiments, the sensor(s) include(s) a time-of-flight sensor, a pair of a left side camera and a right-side camera, and/or a pair of a left side microphone and a right-side microphone.

The disclosure further relates to a method executed by one or more processor(s) for favouring a visual system capacity of wearer of an smart eyewear provided with at least one functionality. That method includes:
- receiving distance data on one or more distance(s) between at least one part of the smart eyewear and one or more material surface(s) located in one or more direction(s) from the wearer,
- determining from the distance data, actuation data adapted to set at least one parameter of the functionality/functionalities so as to favour the visual system capacity of the wearer,
- providing the actuation data for the parameter(s) of the functionality/functionalities to be set.

According to the disclosure, the method includes deriving a type of a current environment of the wearer from the distance data and determining the actuation data from that environment type.

The method for favouring the visual system capacity is advantageously executed by a device for favouring a visual system compliant with any of the modes of the disclosure.

In addition, the disclosure relates to a computer program comprising software code adapted to perform a method for favouring a visual system capacity compliant with any of the above execution modes when the software code is executed by a processor.

The present disclosure further pertains to a non-transitory program storage device, readable by a computer, tangibly embodying a program of instructions executable by the computer to perform a method for favouring a visual system capacity, compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM (read-only memory), an EPROM (Erasable Programmable ROM) or a Flash memory, a portable CD-ROM (Compact-Disc ROM).

### Description of the drawings

The present disclosure will be better understood, and other specific features and advantages will emerge upon reading the following description of particular and non-restrictive illustrative embodiments, the description making reference to the annexed drawings wherein:
**Figure 1** is a block diagram schematically representing an embodiment of a system for favouring a visual system capacity of a wearer of an smart eyewear, including a device compliant with the present disclosure;
**Figure 2** is a block diagram focusing on implementations of the device included in the system of figure 1;
**Figure 3** illustrates a partitioning example of environment types, as exploited by the system of figure 1 and the device of figure 2;
**Figure 4** shows glasses equipped with LED-based time-of-flight sensors, exploited by the system of figure 1 in a first example of distance measurement implementation, involving upward directions;
**Figure 5** shows glasses equipped with LED-based time-of-flight sensors, exploited by the system of figure 1 in a second example of distance measurement implementation, involving upward directions;
**Figure 6** shows glasses equipped with LED-based time-of-flight sensors, exploited by the system of figure 1 in a third example of distance measurement implementation, involving lateral directions;
**Figure 7** shows glasses equipped with LED-based time-of-flight sensors, exploited by the system of figure 1 in a fourth example of distance measurement implementation, involving combined frontal and lateral directions;
**Figure 8** shows glasses equipped with LED-based time-of-flight sensors, exploited by the system of figure 1 in a fifth example of distance measurement implementation, involving combined upward and frontal directions;
**Figure 9** shows glasses equipped with two side camera sensors, exploited by the system of figure 1 in an example of distance measurement implementation;
**Figure 10** represents epipolar geometry representation of a point in a 3D scene, as exploited in stereo vision with the example system of figure 9;
**Figure 11** shows glasses equipped with two side microphones arranged in glass temples, exploited by the system of figure 1 in an example of distance measurement implementation;
**Figure 12** is a top view of the glass temples of Figure 11, highlighting the locations of the microphones;
**Figure 13A** schematically shows the example of figures 11 and 12 when located in a free space;
**Figure 13B** illustrates the kind of waves received by the microphones of the example of figures 9 and 10 in the situation of figure 13A;
**Figure 14A** schematically shows the example of figures 9 and 10 when located in a closed space;
**Figure 14B** illustrates the kind of waves received by the microphones of the example of figures 9 and 10 in the situation of figure 14A;
**Figure 15** is a flow chart showing method steps executed with the system of figure 1;
**Figure 16** is a flow chart showing method steps corresponding to a particular mode of the method illustrated on figure 13;
**Figure 17** diagrammatically shows an apparatus incorporating the device included in the system of figure 1.

On the figures, identical or similar elements are designated by the same references.

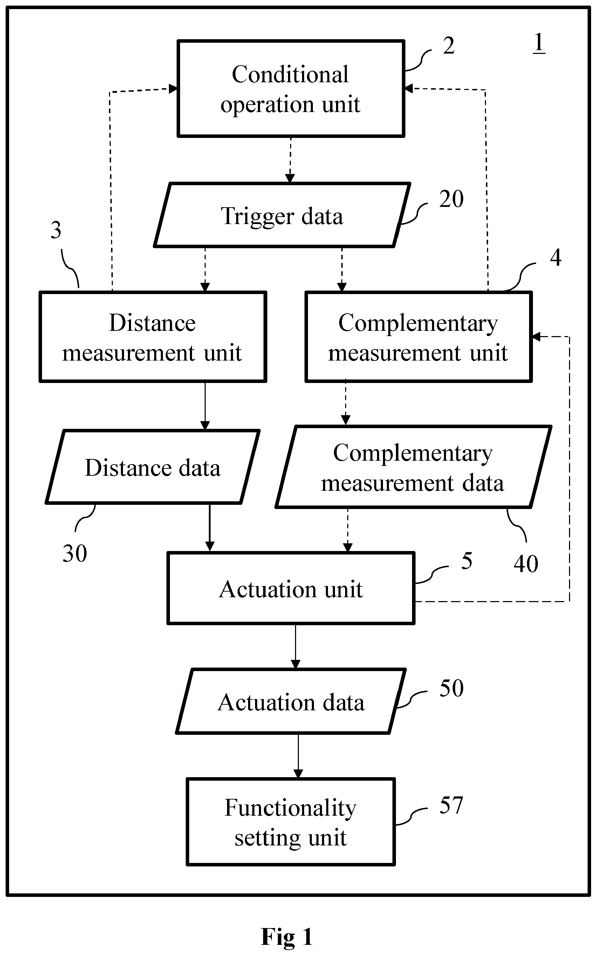

Also, dotted lines on figures 1, 2 and 15 refer to optional aspects.

### Detailed description of embodiments

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry or equipment embodying the principles of the disclosure. Similarly, it will be appreciated that any flow charts, flow diagrams, and the like represent various processes which may be substantially represented in computer readable media and so executed by a computer or processor, or which may be executed by dedicated or suited equipment items, whether or not such computer or processor or such equipment items are explicitly shown.

The functions of the various data processing elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared.

It should be understood that the data processing elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

The present disclosure will be described in reference to a particular functional embodiment of a system 1 for favouring a visual system capacity of a wearer of an smart eyewear, as illustrated on **Figure 1****.**

The system 1 is adapted to set one or more functionalities of the smart eyewear, taking account of the wearer environment. In this respect, it is provided with proper equipment enabling to measure distances between the smart eyewear, or at least part of it, and to infer the current wearer environment from those measured distances.

The smart eyewear functionality/functionalities may notably be selected among one or more items among adjustment of lens tint, optical power or wavelength content, AR content display, audio message delivering, visual or sound alarm emission, wireless data transmission and data recording. Each of the concerned smart eyewear functionalities can be at least partly controlled by setting one or more related parameters. Also, such parameter setting is configured for, and directed to, favouring the visual system capacity of the wearer, in the short term, medium term and/or long term.

The visual system capacity may include a vision capacity, and may notably regard a refractive error and/or visual acuity of at least one of the wearer's eyes. It may thus be related to myopia, hyperopia, astigmatism and/or presbyopia. For example, the smart eyewear functionalities may include warning capabilities (e.g. visual, acoustic, haptic) suited to drawing the wearer's attention when too much time is spent indoors compared to outdoors, since myopia progression can be prevented or curbed by sufficient exposure to natural light. Such evaluation may be coupled with time, season, weather and/or with light monitoring and possibly analysis information for sake of higher relevance. The smart eyewear functionalities may instead, or further, include data recording and/or data transmission capabilities, so as to enable storage of cumulated time spent indoors and/or outdoors and possibly of related particularities (e.g. frequency, durations, hours) with a view to proper resulting recommendations. Among many information sources, the reader may e.g. refer to the article "Ambient Light Regulates Dopamine Signaling and Myopia Susceptibility" by E. G. Landis et al., Invest. Ophthalmol. Vis. Sci., 2021, 62(1), and to the references cited therein.

The vision capacity may concern visual comfort and/or security. For example, the smart eyewear functionalities may include lens tinting, focusing and/or wavelength filtering, suited to adapting lens properties to a wearer surrounding environment, and the parameter setting may e.g. take account of the wearer presence indoors, outdoors or in a vehicle in adjusting those lens properties. In another example, such smart eyewear functionalities are suited to adapting lens properties to the visualization of an AR scene, depending on the presence of the wearer indoors or outdoors.

The visual system capacity may include resistance to visual fatigue and/or circadian rhythm quality. For example, the smart eyewear functionalities may include recommendation capabilities (e.g. AR display, message wireless communication) suited to making lighting suggestions to the wearer or to another person based on schedules spent indoors. The smart eyewear functionalities may also or instead include data recording and/or data transmission capabilities, directed to behaviour follow-up with a view to subsequent lighting suggestions. Such suggestions may e.g. involve Circadian Stimulus or CS, as described notably in the article "Light as a circadian stimulus for architectural lighting" by M.S. Rea and M.G. Figueiro, Lighting Res. Technol., 2016, 0, 1-14, or developed in CIE standard (for "Commission Internationale de I'Eclairage") CIE S 026/E:2018 "CIE System for Metrology of Optical Radiation for ipRGC-influenced Responses to Light".

More precisely, the system 1 includes a distance measurement unit 3, in charge of operating the distance measurements and of producing distance data 30, an actuation unit 5, tasked with processing the distance data so as to deduce the wearer environment and to establish proper resulting actuation data 50, and an smart eyewear functionality setting unit 57, in charge of setting one or more parameters of the smart eyewear functionality/functionalities in compliance with the actuation data 50. In variants, the actuation unit 5 is also configured for further determining a wearer status in the identified wearer environment, e.g. differentiating in a car a driver from a passenger, or an active driver from a stationary driver, and for taking the wearer status into account in establishing the actuation data 50.

Optionally, a conditional operation unit 2 is implemented upstream in the system 1 for making the distance measurements by the unit 3 conditional on some determined factors. Namely, the unit 2 is in charge of establishing whether distance measurements should be activated or not, and to transmit corresponding trigger data 20 to the distance measurement unit 3 for re-actualization. Those trigger data 20 may include any kind of instruction or message leading the unit 3 to start, continue, suspend, resume and/or discontinue distance measurements. For sake of clarity, they may be suited to only some of those functions, e.g. be exclusively directed to start distance measurements, the unit 3 being operated for a given preset period, e.g. between 10 ms and 1 s, or between 1 s and 10 s. The trigger data 20 may alternatively be e.g. exclusively directed to start and stop distance measurements, thereby involving two kinds of messages. In variants, they may e.g. further allow suspending and resuming distance measurements, for example periodically, so that the unit 3 may keep some measurement functions activated or in some standby mode in case of suspension, and turn them off or in a lower level standby mode in case of discontinuation.

For example, the conditional operation unit 2 is configured for receiving explicit instructions from the wearer via a user interface, e.g. an on/off entry, and for reflecting them in the trigger data 20.

In other examples, the unit 2 is provided with light measurement capacities, e.g. involving one or more photodiodes and/or Ambient Light Sensors (ALS). incorporated in the smart eyewear, and is adapted to order distance measurement operations when the measured light meets some predetermined criteria - e.g. when luminosity decreases below a first threshold and/or increases above a second threshold, or when luminosity varies by more than one or more preset percentage(s), or when the wavelength composition is modified in a substantial way according to predetermined conditions.

In still other examples, the unit 2 is provided with movement measurement capacities, e.g. involving one or more IMU (Inertial Measurement Unit), accelerometers and/or gyroscopes incorporated in the smart eyewear, and is adapted to order distance measurement operations only when the movements meet some predetermined criteria - e.g. when they are identified as corresponding to a wearer position change from sitting to standing and/or to the wearer moving from one place to another beyond a predetermined distance. In particular, the unit 2 may include an activity pattern detector. The unit 2 may require only low power for such detection of context transition.

The unit 2 may exploit previous distance measurements, obtained as the distance data 30, for deciding to trigger or not further distance measurements. For example, a simple upward distance estimation may be exploited for deciding whether or not to proceed with more complete and/or complex distance measurements. More precisely in specific implementations: if no material surface is detected above the smart eyewear, it may directly be inferred that the wearer is outdoors, while if a material surface is detected above the wearer at a distance similar to previous measurements and limited wearer movements (i.e. within proper thresholds) were detected meanwhile, it may be inferred that the wearer remained indoors. Only in other circumstances, e.g. if a material surface is detected above the wearer at a quite closer distance to the smart eyewear than in previous measurements, further distance measurements may be triggered.

In some implementations, the unit 2 is provided with a wearing sensor included in the smart eyewear, able to determine if the smart eyewear is being worn by a wearer. Such achievements are described e.g. in patent application WO 2022/018080 to the present applicant. The unit 2 may then be configured for allowing distance measurements only when the smart eyewear is worn.

The conditional operation unit 2 may be adapted to event detection on the ground of typical patterns and/or to the detection of variation of environment situations. It may further combine multiple solutions in a mixed decisional process. A potential significant advantage is to power on sensors only when appropriate.

Optionally too, the system 1 includes a complementary measurement unit 4, tasked with measuring other physical quantities than the distances obtained by the unit 3, i.e. complementary measurement data 40, and with transmitting them to the actuation unit 5 with a view to mixed consideration with the distance data 30 in determining the actuation data 50. The complementary measurements may regard smart eyewear and/or wearer movements, which may be obtained by one or more IMU, accelerometers and/or gyroscopes. Detecting specific vibration schemes may notably support the identification or turning down of distinct transportation kinds associated with medium distances, such as e.g. a train or a bus. The complementary measurements may instead or in addition regard light content, obtained for instance by one or more photodiodes and/or ALS. They may concern the smart eyewear itself (such as light received by at least one smart eyewear lens) and/or the wearer (such as light received by at least part of the wearer).

The complementary measurement data 40 may be exploited by the actuation unit 5 in determining the wearer environment and/or the wearer status in that environment. They may be exploited for feeding the conditional operation unit 2 with a view to potential further measurement steps, in a way similar to the above with the distance data 30 and possibly in combination with them.

Where the conditional operation unit 2 is present in the system 1, the unit 4 may be activated and/or inactivated by the unit 2 in a way similar to the distance measurement unit 3. In variant implementations, which may be combined with the previous ones, the unit 4 may be triggered by the actuation unit 5 in some predetermined circumstances, for example only if one or more specific environment types are identified as corresponding to the current smart eyewear environment.

The functionality setting unit 57 may notably be configured to proceed with adjustment of lens tint, optical power or wavelength content, AR content display, audio message delivering, visual or sound alarm emission, wireless data transmission and/or data recording.

In particular implementations, the smart eyewear is provided with variable transmission lenses, each including a layer of electrochromic materials, controlled to modify optical transmission of the lenses upon detection of variations in the light environment of the wearer (typically varying from a few dozen lux in a dark room to thousands lux outside in bright weather). Generally, higher intensity of light received by the lenses induces increased tinting, while lower intensity of such light induces decreased tinting.

Such an echromic smart eyewear may be differentiated depending on light attenuation capacities. In this respect, it may be referred to sunglass standards defining classes or categories. In particular, according to the international ISO standard ISO 12312-1:2022 and to European standard EN 1836:2005, five categories 0, 1, 2, 3 and 4 associated with increased absorption properties (visible light transmission being respectively located in ranges 80%-100%, 43%-80%, 18%-43%, 8%-18%, 3%-8%, together with particular requirements on UVB, UVA and IR transmission ranges) are defined and required to be marked on smart eyewear frame, while according to US standard ANSI Z80.3-2001, three transmittance categories are distinguished. The echromic smart eyewear can be linked to one of the existing categories based on a maximum absorption capacity. For example, it is ranged in class range [0; 3] for a transmission varying between 90 % and 10 %, and in class range [0; 4] for a transmission varying between 90 % and 4 %. The echromic smart eyewear may further include dynamic control enabling to enhance the wearer comfort when the ambient light varies abruptly, as described in patent application EP-3985429 A1 to the present applicant.

In some modes, the echromic smart eyewear can be switched from one transmission class to another among at least two available classes, e.g. between above-mentioned classes 3 and 4, or between classes 2, 3 and 4. The actuation unit 5 is then configured for determining and transmitting to the functionality setting unit 57, within the actuation data 50, an indicator pointing to the selected transmission class.

Though the units 2, 3, 4, 5 and 57 are presented as separate functional entities, their practical implementations may involve any possible full or partial combination in one or more apparatus or equipment. For example, data processing capacities of the units may be partially or fully centralized as related software in one or more CPU (Central Processing Unit) and/or in one or more IC (Integrated Circuit). Also, movement measurements and/or light measurement may e.g. be common to the conditional operation unit 2 and the complementary measurement unit 4. Conversely, each functional entity may be distributed in two or more material devices, e.g. two LEDs (Light-Emitting Diodes), respectively associated photodiodes, and corresponding processing circuitry for the distance measurement unit 3.

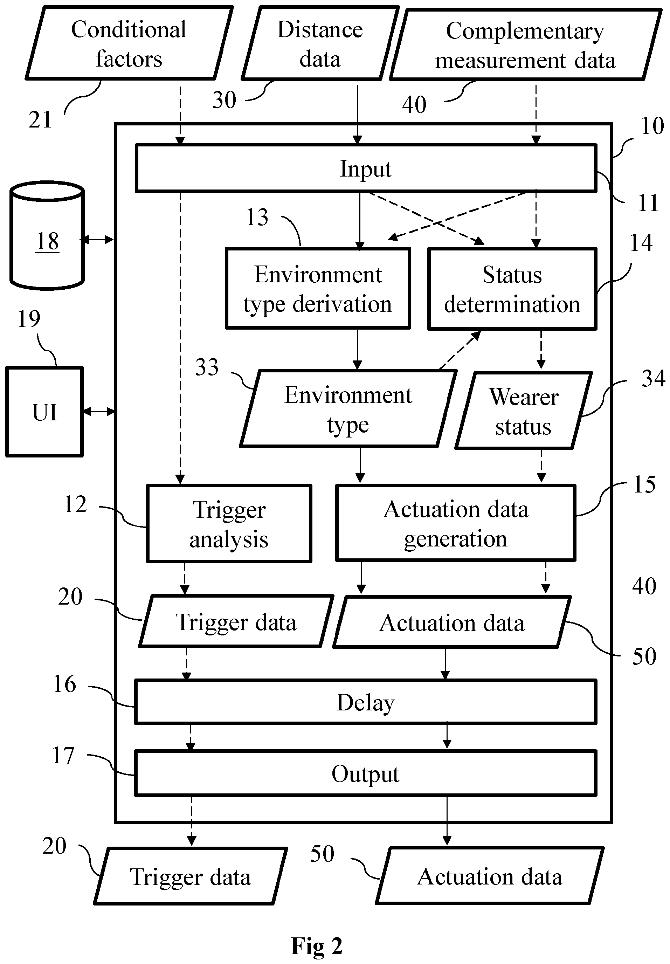

Further insight on the system 1 will be developed below in relation with an associated data processing part, identified as a device 10 for favouring the visual system capacity of the wearer and illustrated on **Figure 2****.** The device 10 is advantageously an apparatus, or a physical part of an apparatus, designed, configured and/or adapted for performing the mentioned functions and produce the mentioned effects or results. In alternative implementations, the device 10 is embodied as a set of apparatus or physical parts of apparatus, whether grouped in a same machine or in different, possibly remote, machines. In some modes, the device 10 is incorporated in the smart eyewear. In alternative modes, the device 10 is fully or partly disconnected from the smart eyewear, and for instance available in a mobile apparatus, such as e.g. a smartphone. The smart eyewear may then be provided with wireless capacities allowing remote communications between circuits located in the smart eyewear and the device 10, such as e.g. via the short-range wireless technology commercialized under the name Bluetooth and standardized in IEEE 802.15.1.

In what follows, the modules are to be understood as functional entities rather than material, physically distinct, components. They can consequently be embodied either as grouped together in a same tangible and concrete component, or distributed into several such components. Also, each of those modules is possibly itself shared between at least two physical components. In addition, the modules are implemented in hardware, software, firmware, or any mixed form thereof as well. The modules belonging to a device are preferably embodied within at least one processor of that device.

The device 10 is adapted to receive the distance data 30 and to generate the actuation data 50 via extracting an environment type 33 from the distance data 30.

In this respect, the device 10 includes an upstream input module 11 and a downstream output module 17, as well as a module 13 for deriving the environment type 33 from at least the distance data 30 received from the input module 11, and a module 15 for generating the actuation data 50 from the environment type 33 and for transmitting them to the output module 17 with a view to setting one or more of the smart eyewear functionality parameters.

Optionally, the device 10 is adapted to receive the complementary measurement data 40 and to take them into account in the module 15 for determining the actuation data 50. For example, the complementary measurement data 40 include acceleration and orientation data, which are jointly used with the distance data 30 for efficiently distinguishing an indoor environment from a vehicle environment.

In some modes, the device 10 further includes a status determination module 14 configured for producing a wearer status 34, the module 15 generating the actuation data 50 from that wearer status 34 together with the environment type 33. In some embodiments, the module 14 is adapted to exploit the distance data 30 and/or the complementary measurement data 40 for deriving the wearer status 34. For example, the latter can be identified as a "car driver" or a "car passenger" status based on short distances around the wearer and/or of particular schemes of accelerations and head movements provided by movement measurements.

The module 14 may be fed by the environment type 33 obtained from the module 13 and use it in determining the wearer status 34. It may proceed with such a determination only for one or more specific items of the environment type 33 and not for others, in which latter case the module 15 may generate the actuation data 50 only from the environment type 33. For example, the differentiation between multiple wearer statuses is considered for functionality parameter actuation only when the environment type 33 is identified as a vehicle, and not when it is recognized at indoors (i.e. in a stable place) or outdoors. Such statutes may then e.g. include "driver" or "passenger", "currently driving" or "currently stationary". All aspects above of the device 10 may correspond to the actuation unit 5.

In particular embodiments, the device 10 is also adapted to receive conditional factors 21 directed to making decisions on distance measurement activation. The device 10 is then provided with a trigger analysis module 12 configured for analysing the conditional factors 21, for generating the trigger data 20 in function of outcome of that analysis and for transmitting those trigger data 20 to the output 17 with a view to distance measurement operations and to the production of the distance data 30.

The latter aspects of the device 10 may correspond to part of the conditional operation unit 2.

In some modes, the device 10 is further provided with a delay module 16 downstream of the actuation data generation module 15 and where applicable, of the trigger analysis module 12, and upstream of the output 17, tasked with delaying the sending of actuation data 50 and/or of the trigger data 20. The delay module 16 enables to introduce latency so as to avoid too prompt or instable changes in operation. In some implementations, the related delay is predetermined (e.g. 100 ms, 1 s or between 2 s and 5s). In others, it can be user-entered, a default value being preset.

The device 10 may possibly access data from, and record data into, one or more local or remote database(s) 18 as and when appropriate. The database(s) 18 can take the form of storage resources available from any kind of appropriate local or remote storage means, which can be notably a RAM or an EEPROM (Electrically-Erasable Programmable Read-Only Memory) such as a Flash memory, possibly within an SSD (Solid-State Disk).

In addition, the device 10 may be interacting with a user interface 19, via which information can be entered and retrieved by a user. The user interface 19 includes any means appropriate for entering or retrieving data, information or instructions, notably visual, tactile and/or audio capacities that can encompass any or several of the following means as well known by a person skilled in the art: a screen, a keyboard, a trackball, a touchpad, a touchscreen, a loudspeaker, a voice recognition system. The interactions with the user interface 19 may be indirect, for example where the device 10 takes the form of a hardware component, such as whole or part of an integrated circuit embedded in an apparatus.

The environment type 33 and where appropriate, the wearer status 34, may be determined among a closed list of possibilities, each associated with particular criteria regarding input data including at least the distance data 30 and possibly also the complementary measurement data 40. That list may be based on a partition of the considered input data, so as to avoid determination ambiguities or uncertainties. It may further include an "unknown" category, in case determination is not possible for any reason.

The modules 13 and/or 14 may rely on simultaneously and/or successively obtained distance data 30 and/or complementary measurement data 40. In modes involving successive distance measurements, for instance, the distance data 30 may be recorded over time into the database(s) 18 and retrieved and processed by the module 13 or 14 in the form of information bunches, e.g. following cumulative distance measurements in at least a predetermined number of distinct directions or after a given preset time period of distance measurements.

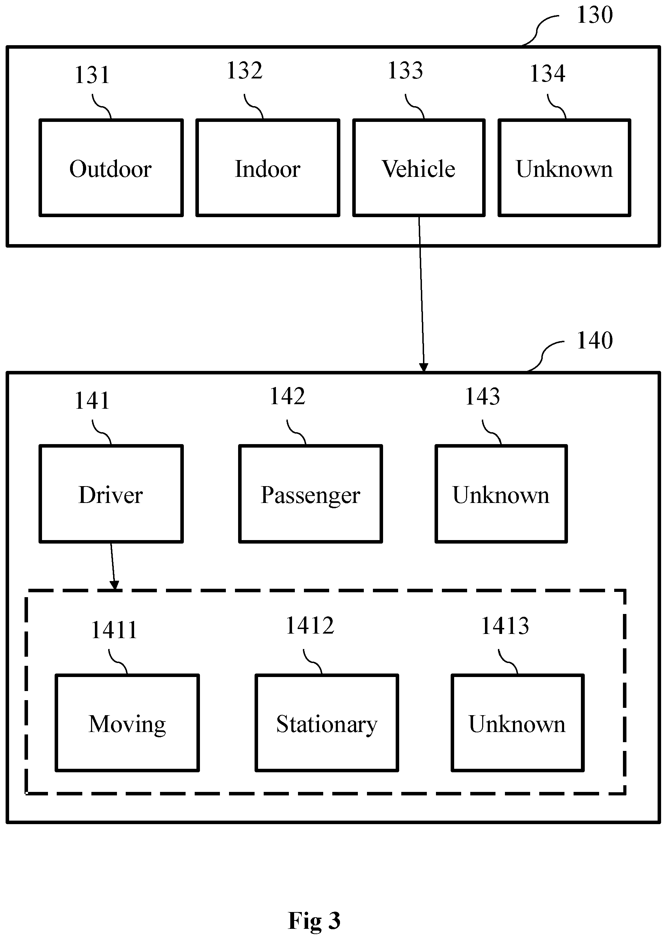

For example, as illustrated on **Figure 3****,** the environment type 33 and the wearer status 34 are respectively selected in sets 130 and 140 of possibilities. The set 130 includes environment types 131, 132, 133 and 134 corresponding respectively to "Outdoor", "Indoor", "Vehicle" and "Unknown" environments. In addition, the set 140 is dedicated to the "Vehicle" environment 133 and includes first-level wearer status classes 141, 142 and 143 corresponding respectively to "Driver", "Passenger" and "Unknown", and second-level wearer status classes 1411, 1412 and 1413 associated with the "Driver" first-level wearer status 141 and corresponding respectively to "Moving", "Stationary" and "Unknown".

In a particular related implementation, the module 13 is configured for determining which of the available environment types is the current one by considering distances between the smart eyewear and a closest material surface in an upward direction. If that distance is larger than a first predetermined threshold, e.g. selected between 2 and 5 meters, the current environment is considered as belonging to the type 131 "Outdoor". Otherwise, if the distance is not larger than the first threshold but is larger than a second predetermined threshold smaller than the first threshold, e.g. selected between 0.5 and 1 meter, the current environment is considered as belonging to the type 132 "Indoor". Otherwise, the distance is not larger than the second threshold and the current environment is considered as belonging to the type 133 "Vehicle". The set may be refined, for example by differentiating in the "Vehicle" environment type between a personal vehicle (smaller distance range) and a collective vehicle (larger distance range).

In variants, the determination of the environment type in the set 130 is exploiting two or more distances in respectively distinct upward directions, e.g. with opposite inclinations with respect to the vertical. In other variants. The above criteria may then be applied to both directions, and lead to an effective environment type identification only when both results are consistent - and otherwise classify the current environment as belonging to the type 134 "Unknown" and possibly reiterate measurements for clarification.

In other variants, the determination of the environment type in the set 130 is exploiting distance measurement in a frontal direction (hereinafter "frontal distance") in addition to an upward direction (hereinafter "upward distance"). For example:
- if the upward distance is larger than a first predetermined upward threshold, e.g. selected between 2 and 5 meters, the current environment is considered as belonging to the type 131 "Outdoor";
- otherwise, if the upward distance is not larger than the first upward threshold but is larger than a second predetermined upward threshold smaller than the first upward threshold, e.g. selected between 0.5 and 1 meter, and the frontal distance is larger than a first predetermined frontal threshold, e.g. selected between 15 and 20 meters, the current environment is considered as belonging to the type 131 "Outdoor" (this may e.g. happen if the wearer is under an umbrella or a parasol);
- otherwise, if the upward distance is not larger than the first upward threshold but is larger than the second predetermined upward threshold, and the frontal distance is not larger than the first predetermined frontal threshold, the current environment is considered as belonging to the type 132 "Indoor";
- otherwise, if the upward distance is not larger than the second upward threshold and the frontal distance is larger than the first predetermined frontal threshold, the current environment is considered as belonging to the type 131 "Outdoor";
- otherwise, if the upward distance is not larger than the second upward threshold, and the frontal distance is not larger than the first predetermined frontal threshold but is larger than a second predetermined frontal threshold smaller than the first frontal threshold, e.g. selected between 0.2 and 0.5 meter, the current environment is considered as belonging to the type 132 "Indoor";
- otherwise, if the upward distance is not larger than the second upward threshold and the frontal distance is not larger than the second frontal threshold, the current environment is considered as belonging to the type 133 "Vehicle".

In less sophisticated modes, only the second frontal threshold is exploited for the frontal distance and not the first one, the environment being considered as "Outdoor" when the upward distance is larger than the first upward threshold, "Indoor" either when the upward distance is comprised between the first and the second upward thresholds, or when it is not larger than the second upward threshold and the frontal distance is larger than the second frontal threshold, and "Vehicle" when the upward distance is not larger than the second upward threshold and the frontal distance is not larger than the second frontal threshold.

In other variants, the determination of the environment type in the set 130 is exploiting distance measurements in opposite lateral directions (hereinafter "lateral distances", i.e. on the right and on the left of the wearer while not necessarily aligned along a same axis) in addition to an upward direction. For example:
- if the upward distance is larger than a first predetermined upward threshold, e.g. selected between 2 and 5 meters, the current environment is considered as belonging to the type 131 "Outdoor";
- otherwise, if the upward distance is not larger than the first upward threshold but is larger than a second predetermined upward threshold smaller than the first upward threshold, e.g. selected between 0.5 and 1 meter, and at least one of the lateral distances is larger than a first predetermined lateral threshold, e.g. selected between 15 and 20 meters, the current environment is considered as belonging to the type 131 "Outdoor";
- otherwise, if the upward distance is not larger than the first upward threshold but is larger than the second upward threshold, and the lateral distances are not larger than the first lateral threshold, the current environment is considered as belonging to the type 132 "Indoor";
- otherwise, if the upward distance is not larger than the second upward threshold and at least one of the lateral distances is larger than the first predetermined lateral threshold, the current environment is considered as belonging to the type 131 "Outdoor";
- otherwise, if the upward distance is not larger than the second upward threshold, and the lateral distances are not larger than the first lateral threshold but at least one of them is larger than a second predetermined lateral threshold, e.g. selected between 1 and 1.5 meter, the current environment is considered as belonging to the type 132 "Indoor";
- otherwise, if the upward distance is not larger than the second upward threshold and both lateral distances are not larger than the second lateral threshold, the current environment is considered as belonging to the type 133 "Vehicle".

It deserves noting that even a single later distance measurement (e.g. on the left side) combined with an upward distance measurement may provide useful environment information, though the system 1 is then less relevant in some circumstances than where relying on two opposite lateral distances.

Also, in less sophisticated modes, only the second lateral threshold is exploited for the lateral distances and not the first one, the environment being considered as "Outdoor" when the upward distance is larger than the first upward threshold, "Indoor" either when the upward distance is comprised between the first and the second upward thresholds, or when it is not larger than the second upward threshold and at least one of the lateral distances is larger than the second frontal threshold, and "Vehicle" when the upward distance is not larger than the second upward threshold and the lateral distances are not larger than the second frontal threshold.

In further example implementations, which may be combined with the previous ones, the system 1 is adapted to differentiate between wearing a hat or a cap, and being located in a low-ceiling place (e.g. in a car). This may be based on a very small upward distance threshold, e.g. selected between 10 and 15 cm. Such differentiation is advantageously combined with frontal and/or lateral distance measurements that, in the identified presence of a hat or cap, may confirm the presence of an outdoor environment or infirm it in a constructive way by pointing to another kind of environment (such as "Indoor" or "Vehicle").

The upward, frontal and lateral directions may be combined in any relevant way, depending on the implementations.

In the above example implementations, the status determination module 14 is configured for being activated only when the module 13 identifies the current environment as belonging to the "Vehicle" type 133. Then, for instance, the determination of the wearer status in the set 140 is exploiting measured movements received as part or all of the complementary measurement data 40:
- if the movements are remote enough from substantial wearer status changes (exit from the vehicle, displacements in the vehicle...) and are involving head movements close enough to a reference driver head scheme, proximity being computed based on an appropriate metric, the wearer status is identified as belonging to the class 141 "Driver"; that status class is recorded and kept for later operations as long as the movements remain remote enough from substantial wearer status changes, the wearer status being selected in the sub-class 1411 "Moving" in presence of movements identified as vehicle displacements and in the sub-class 1412 "Stationary" in the absence of such movements;
- if the movements are remote enough from substantial wearer status changes and are not involving head movements close enough to a reference driver head scheme, the wearer status is classified in the class 142 "Passenger"; that status is recorded and kept for later operations as long as the movements remain remote enough from substantial wearer status changes;
- if the movements are close enough to substantial wearer status changes, the status is set to the class 143 "Unknown" and the identification operations are reiterated later.

The metric used for computing distances between measured movements and reference movements may e.g. involve Euclidian, taxicab or Chebyshev distance, and be based on distance thresholds associated with the exploited metric, as known to a person skilled in the art.

Continuing with the illustrative implementations above, once the environment type 33 in the set 130 and if appropriate the wearer status 34 in the set 140 are known, the module 15 determines in operation the associated actuation data 50. For example, the smart eyewear functionality including lens tint adjustment according to the amount of light received at eyes level (echromic case):
- if the current environment belongs to type 131 "Outdoor", a classical auto-mode is operated (the echromic parameter is set to "on", which may e.g. correspond to sunglass class range [0; 3]);
- if the current environment belongs to type 132 "Indoor", the tint level is fixed to clear state (the echromic parameter is set to "off');
- if the current environment belongs to type 133 "Vehicle" and the wearer status belongs to class 142 "Passenger", the classical auto-mode is operated (the echromic parameter is set to "on"); in a variant, the tint level is then fixed to a strengthened tinting mode (the echromic parameter is set to "strengthened", which may e.g. correspond to sunglass class range [0; 4]);
- if the current environment belongs to type 133 "Vehicle", the wearer status belongs to class 141 "Driver" and sub-class 1411 "Moving", the classical auto-mode is operated (the echromic parameter is set to "on");
- if the current environment belongs to type 133 "Vehicle", the wearer status belongs to class 141 "Driver" and sub-class 1412 "Stationary", the tint level is fixed to clear state (the echromic parameter is set to "off').

In variants, a special echromic mode is provided for and selected for the active driver, e.g. enabling attenuated lens tinting and/or involving lower light thresholds for tinting.

In finer versions of the system 1, the set of environment types enables to distinguish the type of vehicle between cars on one hand, and buses or trains on the other hand. This may be based on a combination of measured distances and movements. Consistently, the echromic processing may differ depending on whether the wearer is a passenger in a car, or in a bus or train (corresponding then to public transportation). For example:
- if the current environment belongs to the "Car" type and the wearer status belongs to the "Passenger" class, the strengthened tilting state is operated;
- if the current environment belongs to the "Bus or Train" type and the wearer status belongs to the "Passenger" class, the tint level is fixed to clear state (the echromic parameter is set to "off').

Various implementation examples of the distance measurement unit 3 are described below. As apparent from the above explanations, the parts of the system 1, including the device 10, are closely interacting and interdependent, so that their features and functionalities are determined in close relationship with the distance measurement capacities. In particular, the number and identities of the measurement directions are pivotal to the criteria exploited by the module 13 in determining the environment type 33. Also, the set of available environment types and, if appropriate, the set of available wearer statuses, among which the environment type 33 and the wearer status 34 are respectively selected, may depend on the distance measurement capacities and be more refined when the latter are enhanced. For example, schemes involving increasing levels of differentiation between the environments and possibly the wearer statuses may respectively consist in:
- indoors and outdoors,
- indoors, outdoors and vehicle,
- indoors, outdoors, personal vehicle and collective vehicle,
- indoors, outdoors, vehicle as a driver, personal vehicle as a passenger, collective vehicle as a passenger.

The selection of appropriate implementations of the distance measurement unit 3 may be based on considerations including notably a desired level of scheme refinement, bulkiness versus discretion, weight, costs, convenience to the wearer, safety and/or privacy. It may further be particularly interesting to proceed with sensor fusion, so that the embodiments below may be combined in any operative way across the implementation classes.

### Examples 1 - Time-of-flight distance measurements

In a first class of implementations, the distance measurement unit 3 includes one or more ToF (Time-of-Flight) sensors, arranged for example on the temple(s), rim(s), bridge or hinge(s) of a pair of glasses. Such a ToF sensor is configured for sending a signal towards a target and for capturing a corresponding return signal from that target, and for deducing a distance to the target from the elapsed time between the signal transmission and reception, i.e. from the round trip time.

The signal may be electromagnetic, notably in the form of an artificial light signal, and the ToF sensor may correspondingly include an LED (Light-Emitting Diode) or a laser diode. Exploited signals may include light pulses. They may instead be suited to specific recognition so as to avoid interferences, notably where two or more ToF sensors are operating in parallel from the same smart eyewear. For example, time multiplexing, modulation and/or correlation techniques may be used, as known to a skilled person.

The LED may be operating in the infrared (IR) range or in the ultraviolet (UV) range. The LED is e.g. made from InGaAs (Indium Gallium Arsenide), InGaN (Indium Gallium Nitride) or AlGaN (Aluminium Gallium Nitride). It may be used for both photoemission and photodetection. In an alternative example, the LED is associated with a photodiode electrically isolated from the LED by an opto-isolator. The photodiode is for example based on a PIN junction.

The exploitation of one or more LEDs for the ToF sensor may be attractive, due to low energy consumption (e.g. between 1 and 100 mW in average in operation), low maintenance and small size (e.g. between 1 and 2 mm).

In other implementations, the ToF sensor includes a laser and operates in a Lidar mode (for "Light detection and ranging"). It may involve an injunction laser diode (ILD). The latter may be made from a compound semiconductor material such as e.g. gallium arsenide, indium phosphide, gallium antimonide and gallium nitride. It may be a double heterostructure (DH) laser involving a pair of materials comprising gallium arsenide and aluminium gallium arsenide. In some modes, the ILD is configured for IR emissions. The one or more ILD may be associated with one or more photodiodes. In alternative modes, interferometric distance measurement is provided for, hinging on the inherently coherent nature of laser beam light.

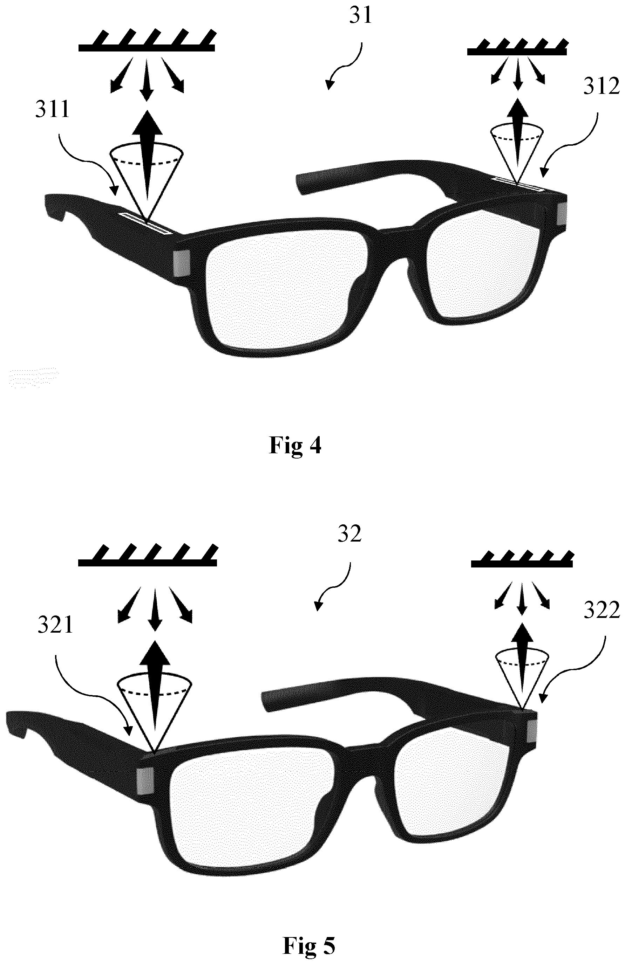

In a first example of the present class, illustrated on **Figure 4****,** a pair of glasses 31 includes two ToF sensors 311 and 312 arranged on the respective right and left eyewear temples so as to produce upward light emissions. Those sensors 311 and 312 may be near the temple hinges. As developed above, the obtained distance information may enable to differentiate an indoor environment from an outdoor environment, and possibly also from a vehicle environment, in function of the presence of a ceiling and of its distance to the eyewear. Even though subject to potential errors, the success rate may be relatively high, and provide satisfying working in usual situations. In addition, the obtained assessment may be possibly coupled with correlating sources, the automatic parameter setting may be reserved to configurations without critical stakes (e.g. no automatic change for a vehicle driver), and the outcome may be open to correction directly entered by the wearer.

In some implementations, the upward directions have fixed tilting respectively on the right and on the left with respect to the vertical, e.g. with an offset comprised between 10° and 15°. This may enable safer estimation of a material surface located above the wearer, by avoiding notably misleading consideration of a localized reflecting object or of a limited overhanging surface.

In other implementations, the ToF sensors 311 and 312 enable flexible adjustments of the upward emission directions. Multiple upward directions can thus be successively targeted, allowing space scanning and thereby strengthening support to current environment identification. Alternatively, the upward direction(s) may be adjusted in case of uncertain result, e.g. blurred or poorly detectable signal.

In a second example of the present class, illustrated on **Figure 5****,** a pair of glasses 32 differs from the previous example in that it includes two ToF sensors 321 and 322 arranged on the outer edges of respectively the right and left eyewear rims so as to produce upward light emissions.

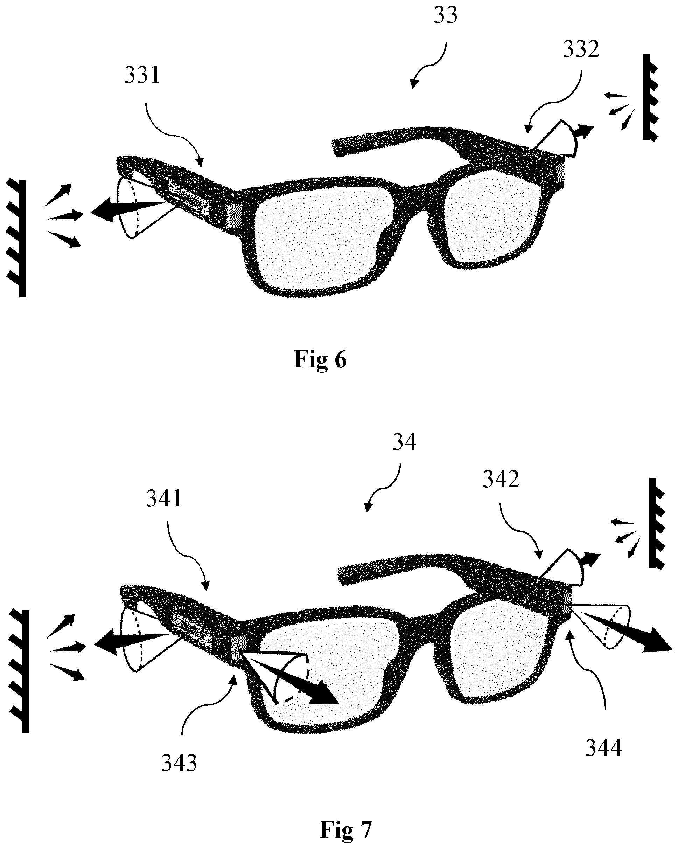

In a third example of the present class, illustrated on **Figure 6****,** a pair of glasses 33 includes two ToF sensors 331 and 332 arranged on the respective right and left eyewear temples so as to produce respectively right and left lateral light emissions. The obtained distance information may enable to differentiate an indoor environment from an outdoor environment, and possibly also from a vehicle environment, in function of the presence of walls and of their distance to the eyewear.

For instance, the module 13 may identify the current environment as:
- outdoors when at least one of the lateral distances to a material surface is larger than 10 m;
- indoors when both lateral distances are smaller than 10 m and at least one of them is larger than 1 m;
- a vehicle when both lateral distances are smaller than 1 m.

The remarks above about direction flexibility or scanning, success rate and potential errors regarding the upward direction likewise apply here. In this respect, it deserves noting that while a single lateral distance information entails relatively high risks to be misleading (e.g. if the wearer is walking outside close to an external wall), exploiting the opposite directions may reduce substantially the error rate.

In a fourth example of the present class, illustrated on **Figure 7****,** a pair of glasses 34 includes two pairs (341, 342) and (343, 344) of ToF sensors. The sensors 341 and 342 are arranged on the respective right and left eyewear temples so as to produce outward light emissions in opposite lateral directions. The other sensors 343 and 344 are arranged respectively at the levels of the right and left temple hinges and configured for producing light emissions in frontal directions. The obtained distance information may enable to differentiate an indoor environment from an outdoor environment, and possibly also from a vehicle environment, in function of the presence of walls and of their distance to the eyewear.

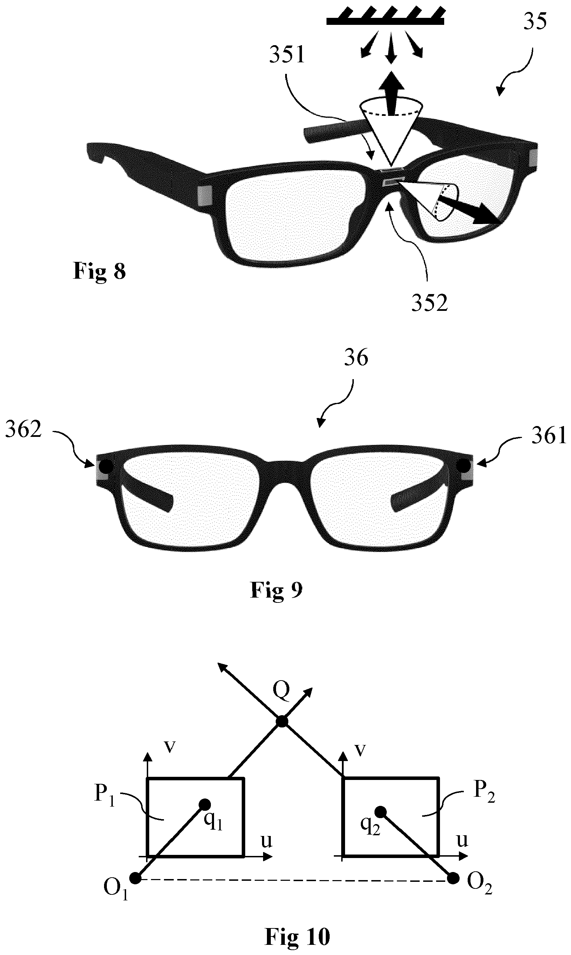

In a fifth example of the present class, illustrated on **Figure 8****,** a pair of glasses 35 includes two ToF sensors 351 and 352 both located on the eyewear bridge and respectively arranged for light emissions in upward and forward directions.

The observations above about the other examples of the class involving ToF sensors also apply in a similar way. More precisely in interesting particular implementations of the present case, the system 1 is configured for collecting and processing distance measurements obtained by the sensor 352 in several forward directions and entailed by rotating movements of the wearer' head or body, as well as orientation information obtained e.g. by gyroscopes and associated with those distance measurements.

The ToF sensors are advantageously protected, notably against dirt and/or condensation, e.g. by a cover and/or a protective layer.

The reader will readily note that other configurations are possible and encompassed in the present class of implementations. In particular, upward and lateral and/or frontal light emissions may be combined in an smart eyewear.

In alternative embodiments of the present class, the ToF sensors are based on ultrasounds instead of light, the echoes from reflecting material surfaces being retrieved for distance assessment. Such sensors may be implemented by practicing holes in the smart eyewear frame.

### Examples 2 - Stereo vision distance measurements

In a second class of implementations, the distance measurement unit 3 includes at least two camera sensors arranged on both right and left smart eyewear sides, for example in the temples, hinges and/or outer edges of the frame faces of a pair of glasses. Those camera sensors are oriented towards upward directions, opposite lateral directions and/or frontal and lateral directions. Also, the module 13 is configured for proceeding with epipolar distance assessment based on at least pairs of images jointly obtained by the respective camera sensors, as well known to a skilled person.

In a particular example thereof, illustrated on **Figure 9****,** a smart eyewear 36 is provided with two camera sensors 361 and 362 arranged respectively on the left and right smart eyewear sides of the frame face, and the module 13 is configured for exploiting pairs of images jointly obtained by the respective camera sensors 361 and 362.

A typical related triangulation operation compliant with epipolar geometry (i.e. geometry of stereo vision) is shown on **Figure 10** for that example. Namely, the camera sensors 361 and 362 having respective optical centres O₁ and O₂, which represent them in a pinhole camera model, and virtual image planes P₁ and P₂ in front of them, a point of interest Q has respective projections q₁ and q₂ onto the image planes P₁ and P₂. Deducing the 3D point Q from the 2D projections q₁ and q₂ is the basis of triangulation, and enables distance evaluations.

In particular modes, image resolution is limited to a few lines for each camera, horizontal ones for example. This may prove reliable for privacy and/or attractive for power consumption.

In variants, at least two of the camera sensors are arranged at two different positions on a same smart eyewear temple.

The camera sensors may e.g. be based on components having a size comprised between 1 mm and 2 mm.

### Examples 3 - Audio-based distance measurements

In a third class of implementations, the distance measurement unit 3 includes at least two microphones arranged on both right and left smart eyewear sides, for example in the temples, hinges and/or outer edges of the frame faces of a pair of glasses.

The module 13 is then configured for analysing delays between reflected sound waves received at the respective microphones, and for deducing distances and locations of solid interfaces with respect to the wearer by taking account of sound wave propagation and of distances between the microphones. In this respect, a shape of an instantaneous sound wave form surrounding the wearer may be estimated in an intermediary step. In addition, an autocorrelation algorithm may be used to quantify the delays. Also, the absence of reflected sound waves indicates a free space environment. The distances between the microphones may be preset, e.g. from mechanical design, or obtained by a calibration procedure.

Interestingly, no audio source is required in the smart eyewear, but only audio receivers.

The microphones may further be offset not only in width, i.e. parallel to the wearer's coronal axis (namely, to an axis joining canthi of the wearer's eyes) when the smart eyewear is normally worn, but also in depth, i.e. parallel to the wearer's sagittal axis (namely, with respect to the eyes) when the smart eyewear is normally worn, and/or in height, i.e. along the wearer's vertical axis when the smart eyewear is normally worn. Such arrangements may allow more robust distance estimations due to greater spacing between the microphones, as well as finer distance assessment around the wearer.

Some related modes are directed to 2D audio recognition on the ground of at least two exploited microphones. Other related modes are directed to 3D audio recognition on the ground of at least three exploited microphones.

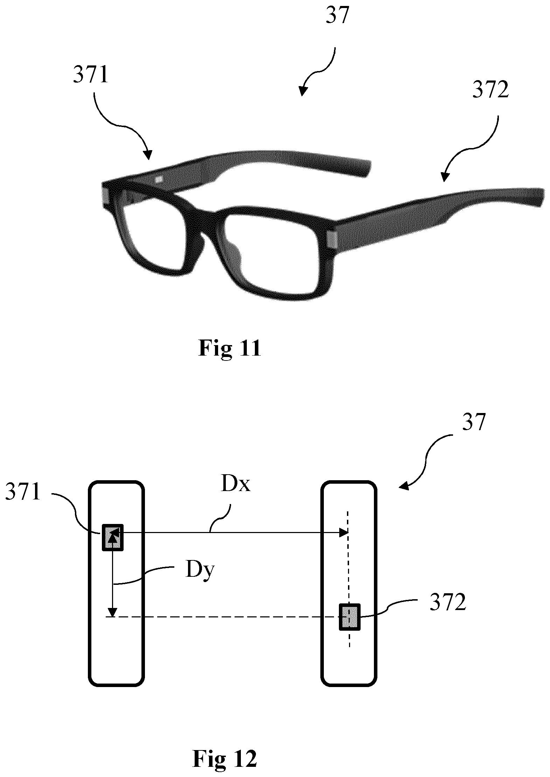

In a particular example, illustrated on **Figure 11****,** a smart eyewear 37 is provided with two microphones 371 and 372 arranged on both right and left smart eyewear temples. The right microphone 371 is placed at the front area of the right temple, while the left microphone 372 is placed at the rear area of the left temple. The smart eyewear temples being unfolded like in wearing condition, the gap between the microphones 371 and 372 has orthogonal projections onto the wearer's coronal axis and the wearer's sagittal axis that are worth respectively Dx and Dy, as visible on **Figure 12****.**

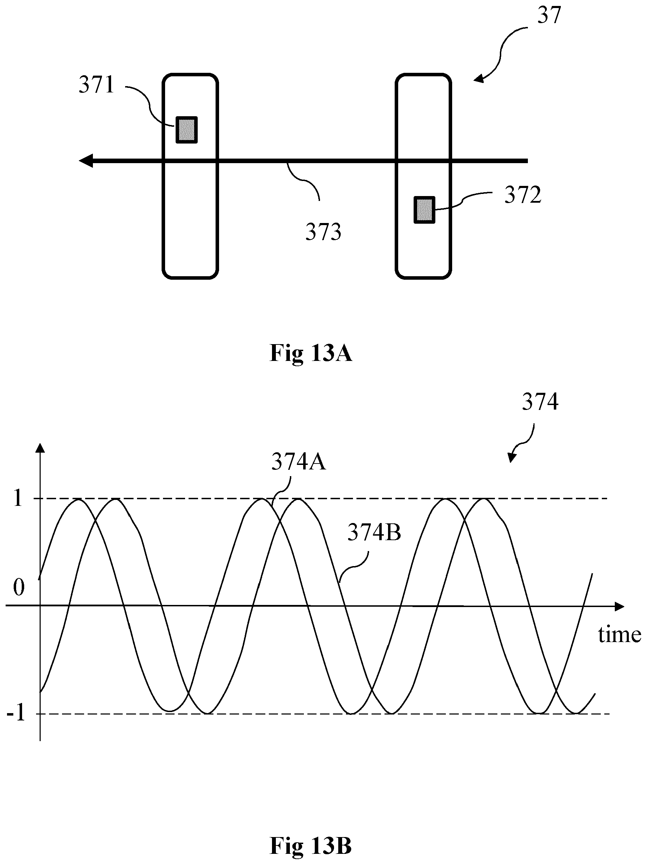

In operation in a free space, see **Figure 13A****,** no reflected sound waves appear. Thus, when an incident sound wave 373 successively reaches the microphones 372 and 371, an associated audio pattern 374 comprising captured waves 374A and 374B at respectively the microphones 371 and 372, as represented on **Figure 13B****,** merely represents a delay propagation relative to the inter-microphone gap.

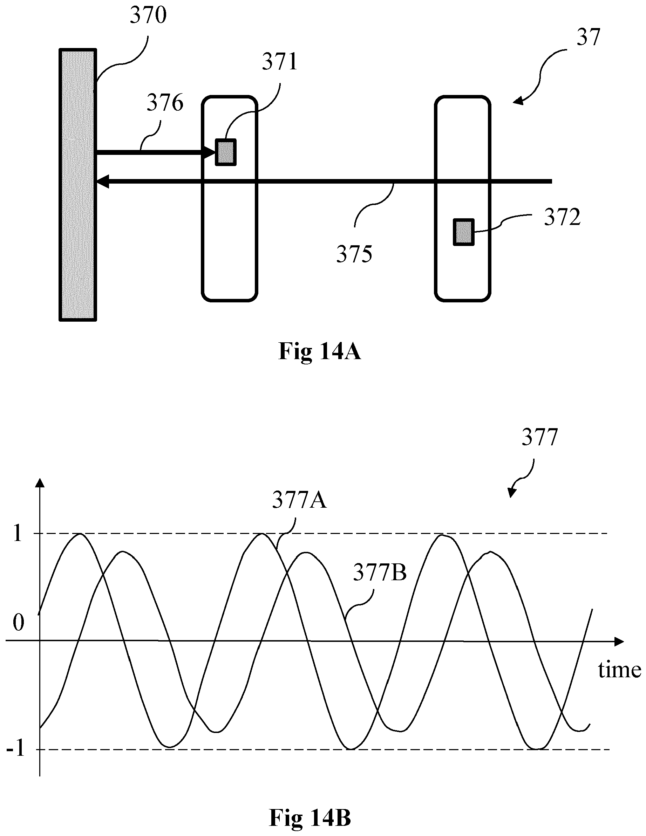

By contrast in a closed space, see **Figure 14A****,** an incident sound wave 375 is reflected into a reflected sound wave 376 by a solid interface 370 (e.g. a wall) after having passed through respectively the microphones 372 and 371, subject to both attenuation and delay with respect to the incident wave 375 (for sake of simplicity only, the reflected wave 376 is represented parallel to and offset from the incident wave 375, and both perpendicular to the solid interface 370). Accordingly, in an associated audio pattern 377 comprising captured waves 377A and 377B at respectively the microphones 371 and 372, as represented on **Figure 14B****,** a specific differential in amplitude and in phase is entailed between the waves 377A and 377B. From those captured data, a distance between the right microphone 371 and the solid interface 370 can be estimated, as well as a direction in which the solid interface 370 is located with respect to the wearer.

Interesting artificial intelligence (Al) implementations enabling distances to be derived from stereo captures may notably be found in the M. Sc. Thesis by G. Bologni, "Room geometry estimation from stereo recordings using neural networks", Delft University of Technology, 2020. More precisely, sources to localize are mirror image sources that reveal the geometry of an environment under analysis, including positions of reflective surfaces, thanks to a compact array of two microphones. The reader's attention is also drawn to the substantial bibliography part of that thesis in the field of audio-based distance measurements, which points to various existing AI and non-Al solutions.

In variant implementations, the distance measurement unit 3 includes at least one microphone arranged on at least one of the right and left smart eyewear sides, and the module 13 is configured for analysing sound waves received by that microphone or by each of those microphones. From such signal processing, the distance measurement unit 3 is adapted to deduce distances and locations of solid interfaces with respect to the wearer by taking account of sound wave propagation and of combinations between incident and (possibly repeatedly) reflected waves.

The previous embodiments may be combined, the mono-microphone analyses being for example refined by multi-microphone results.

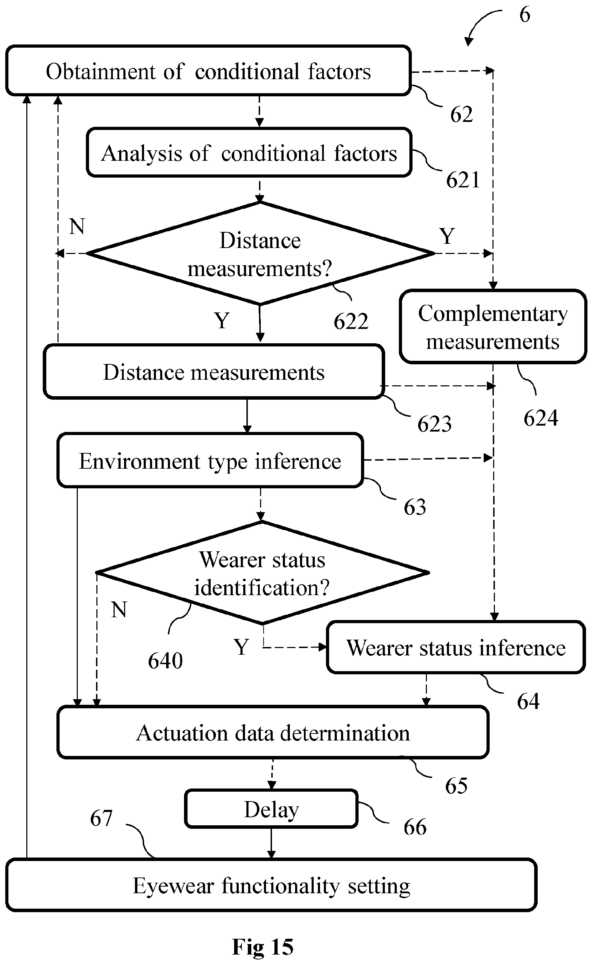

A process for favouring a visual system capacity of the wearer, possibly executed with the system 1, is developed below in relation with **Figure 15****.** The process 6 includes:
- in optional execution modes, obtain the conditional factors 21 (step 62), analyse those conditional factors 21 (step 621), determine whether distance measurement must be accordingly activated (step 622), and if not, loop back to updated items of the conditional factors 21;
- if distance measurements are decided, proceed so for generating the distance data 30 (step 623); optionally use the latter as part of the conditional factors 21 for additional distance measurements;
- in optional execution modes, further obtain complementary measurement data 40 (step 624); those complementary data may correspond to part or all of the conditional factors 21 and/or may be fully or partly triggered consistently with distance measurements;
- deduce the environment type 33 from at least the distance data 30 and possibly also the complementary measurement data 40 (step 643);
- optionally, possibly conditional on the identified environment type 33 via related checking (step 640), deduce the wearer status 34 from the distance data 30 and/or the measurement data 40 (step 64);
- determine the actuation data 50 from at least the environment type 33, and also from the wearer status 34 where appropriate (step 65);
- in optional execution modes, delay smart eyewear functionality parameter setting for sake of proper operational latency (step 66);
- set the functionality parameter(s) (step 67), and loop back to original process steps for updating.

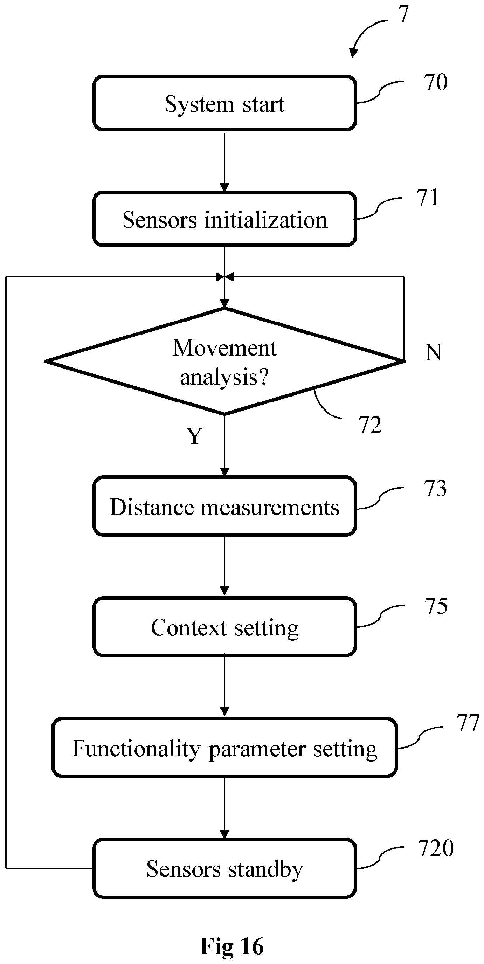

In a more specific example process 7, illustrated on **Figure 16****,** it is proceeded as follows in relation with the system 1:
- start the system 1 for favouring a wearer visual system capacity (step 70);
- initialize the exploited sensors - including distance measurement sensors of unit 3 and movement sensors of unit 2 (step 71);
- detect with unit 2 from at least the movement sensors whether the wearer is transitioning between sitting and standing, or between walking and standing (step 72); if not, reiterate that checking subsequently; the potentially low-power movement checking detection may be always on;
- if such transitioning is identified, power on the distance measurement sensors of unit 3 and proceed with distance measurements (step 73);
- set with unit 5 a context upon measured distance values, i.e. the distance data 30, by extracting the environment type 33 (step 75); steps 73 and 75 may amount to event-triggered fine-tuned context sensing;
- proceed with unit 5 and unit 57 with proper smart eyewear functionality parameter setting if relevant (step 77);
- put the distance measurement sensors in standby (step 720) and reiterate the movement checking of step 72.

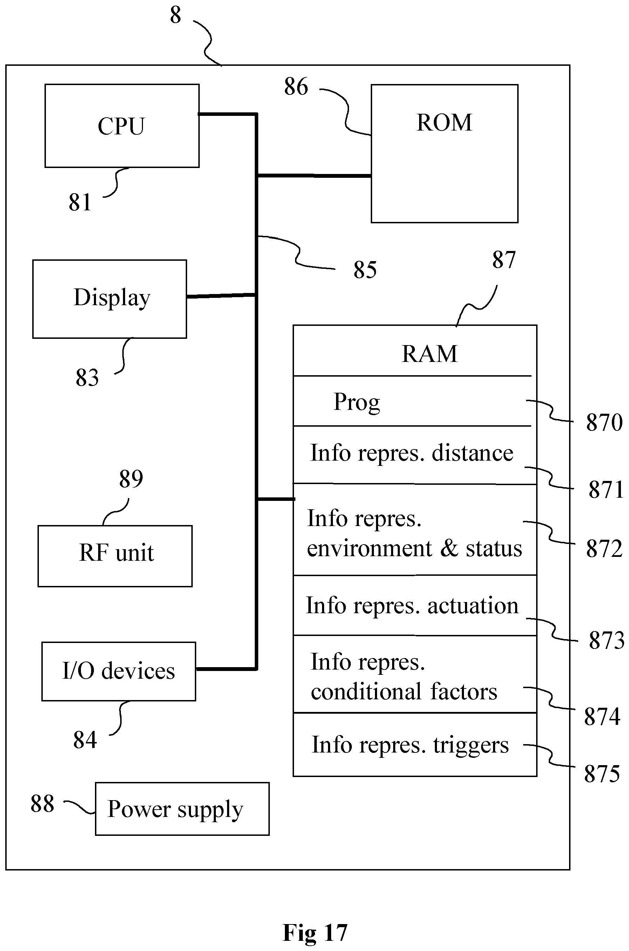

A particular apparatus 8, visible on **Figure 17****,** is embodying the data processing device 10 described above. It may notably correspond to a microchip integrated in the smart eyewear. In alternative implementations, the smart eyewear is provided with power, measurement, functionality actuation and telecommunication (e.g. Bluetooth) capacities, and the apparatus 8 corresponds for example to a smartphone, a tablet, a head-mounted display (HMD) or a laptop configured for communicating with the smart eyewear.

The apparatus 8 comprises the following elements, connected to each other by a bus 85 of addresses and data that also transports a clock signal:
- a microprocessor 81 (or CPU);
- a non-volatile memory of ROM type 86;
- a random-access memory (RAM) 87;
- one or several I/O (Input/Output) devices 84 such as for example vocal recognition or gesture recognition capabilities, a keyboard, a mouse or a joystick;
- a power source 88; and
- a radiofrequency (RF) unit 89.

According to a variant, the power supply 88 is external to the apparatus 8.

The apparatus 8 also comprises a display device 83 of display screen type. According to a variant, the display device is external to apparatus 8 and is connected thereto by a cable or wirelessly for transmitting the display signals. The apparatus 8 comprises an interface for transmission or connection adapted to transmit a display signal to an external display means such as for example an LCD (for "Liquid-Crystal Display") or OLED (for "Organic Light-Emitting Diode") screen or a video-projector. In this respect, the RF unit 89 can be used for related wireless transmissions.

It is noted that the word "register" used in the description of memories 87 can designate in each of the memories mentioned, a memory zone of low capacity (some binary data) as well as a memory zone of large capacity (enabling a whole program to be stored or all or part of the data representative of data calculated or to be displayed). Also, the registers can be arranged and constituted in any manner, and each of them does not necessarily correspond to adjacent memory locations and can be distributed otherwise (which covers notably the situation in which one register includes several smaller registers).

The RAM 87 comprises notably:
- in a register 870, the operating program of the microprocessor 81;
- in a register 871, information representative of the distance data 30;
- in a register 872, information representative of the environment type 33 and wearer status 34;
- in a register 873, information representative of the actuation data 50;
- in a register 874, information representative of the conditional factors 21;
- in a register 875, information representative of the trigger data 20.

When switched-on, the microprocessor 81 loads and executes the instructions of the program contained in the RAM 87.

## Claims

1. A device (1; 8; 10) for favouring a visual system capacity of a wearer of an smart eyewear (31; 32; 33; 34; 35; 36; 37) provided with at least one functionality, said device including:
- at least one input (11) adapted to receive distance data (30) on at least one distance between at least one part of the smart eyewear and at least one material surface located in at least one direction from the wearer,
- at least one processor configured for determining from the distance data, actuation data (50) adapted to set at least one parameter of said at least one functionality so as to favour said visual system capacity of the wearer,
- at least one output (17) adapted to provide the actuation data for said at least one parameter of said at least one functionality to be set,
**characterized in that** said at least one processor is configured for deriving a type (33) of a current environment of the wearer from the distance data and for determining the actuation data from said environment type.

2. The device (1; 10) for favouring said visual system capacity according to claim 1, **characterized in that** said at least one direction includes at least one upward direction.

3. The device (1; 10) for favouring said visual system capacity according to claim 1 or claim 2, **characterized in that** said at least one direction includes at least two directions selected among a frontal direction and lateral directions.

4. The device (1; 10) for favouring said visual system capacity according to any of the preceding claims, **characterized in that** the smart eyewear (31; 32; 33; 34; 35; 36; 37) including at least one lens, said at least one parameter of said at least one functionality includes at least one of a transmittance level, a reflectance level, a polarization level, a wavelength filter level, an optical power, a spatial light distribution property, an augmented reality visual property, an augmented reality display content and a selective collection of lens-related illumination data, associated with said at least one lens.

5. The device (1; 10) for favouring said visual system capacity according to claim 4, **characterized in that** said at least one input (11) is adapted to receive lens light data (40) relevant to light received by said at least one lens, and said actuation data (50) are adapted to set said at least one parameter of said at least one functionality also in function of the lens light data.

6. The device (1; 10) for favouring said visual system capacity according to any of the preceding claims, **characterized in that** the derived type (33) of the current environment being selected among at least an indoor type (132) and an outdoor type (131), the actuation data (50) are adapted to have said at least one parameter set to a first parameter kind when said type is the outdoor type and to have said at least one parameter set to a second parameter kind when said type is the indoor type.

7. The device (1; 10) for favouring said visual system capacity according to claim 6, **characterized in that** the derived type (33) of the current environment being selected among also a vehicle type (133), the actuation data (50) are adapted to have said at least one parameter set to a third parameter kind when said type is the vehicle type.

8. The device (1; 10) for favouring said visual system capacity according to claim 7, **characterized in that** said at least one input (11) is adapted to receive driving hints (30; 40) pointing to driving operations when the type (33) of the current environment is identified as the vehicle type (133), and said at least one processor is configured for deriving a driving status (34) of the wearer from said driving hints and for determining the actuation data (50) also in function of said driving status.

9. The device (1; 10) for favouring said visual system capacity according to any of the preceding claims, **characterized in that** the actuation data (50) are adapted to trigger at least one distance measurement suited to setting said at least one parameter of said at least one functionality.

10. The device (1; 10) for favouring said visual system capacity according to any of the preceding claims, **characterized in that** said at least one input (11) is adapted to receive wearer light data (40) relevant to light received by at least part of the wearer and said at least one processor is configured for deriving the type (33) of the current environment also from said wearer light data.

11. The device (1; 10) for favouring said visual system capacity according to any of the preceding claims, **characterized in that**:
- said at least one input (11) is adapted to receive motion data (21) on motions of the wearer,
- said at least one processor is configured for determining from at least said motion data whether the type (33) of the wearer's current environment is likely to change and for generating distance measurement instructions (20) only if so,
- said at least one output (17) is adapted to provide said distance measurement instructions for obtaining the distance data (30).

12. Asmart eyewear (31; 32; 33; 34; 35; 36; 37) for favouring a visual system capacity of a wearer of the smart eyewear, the smart eyewear being provided with at least one functionality and including:
- at least one sensor (311, 312; 321, 322; 331, 332; 341, 342, 343, 344; 351, 352; 361, 362; 371, 372) adapted to assess at least one distance between at least one part of the smart eyewear and at least one material surface located in at least one direction from the wearer,
- at least one actuator adapted to set at least one parameter of said at least one functionality,
- a device (10) for favouring said visual system capacity by receiving, from said at least one sensor, distance data (30) representative of said at least one distance and by providing said at least one actuator with actuation data (50) depending on the distance data for setting said at least one parameter of said at least one functionality so as to favour said visual system capacity of the wearer,
**characterized in that** the device for favouring said visual system capacity is compliant with any of the preceding claims.

13. The smart eyewear according to claim 12, **characterized in that** said at least one sensor (311, 312; 321, 322; 331, 332; 341, 342, 343, 344; 351, 352; 361, 362; 371, 372) includes at least one of a time-of-flight sensor (311, 312; 321, 322; 331, 332; 341, 342, 343, 344; 351, 352;), a pair of a left side camera and a right-side camera (361, 362), and a pair of a left side microphone and a right-side microphone (371, 372).

14. A method (6; 7) executed by at least one processor for favouring a visual system capacity of a wearer of an smart eyewear (31; 32; 33; 34; 35; 36; 37) provided with at least one functionality, said method including:
- receiving distance data (30) on at least one distance between at least one part of the smart eyewear and at least one material surface located in at least one direction from the wearer,
- determining (654; 75, 76) from the distance data, actuation data (50) adapted to set at least one parameter of said at least one functionality so as to favour said visual system capacity of the wearer,
- providing the actuation data for said at least one parameter of said at least one functionality to be set (66; 76),
**characterized in that** said method includes deriving a type (33) of a current environment of the wearer from the distance data and determining the actuation data from said environment type,
said method for favouring said visual system capacity being advantageously executed by a device (1; 10) for favouring a visual system capacity according to any of claims 1 to 11.

15. A computer program comprising software code adapted to perform a method (6; 7) for favouring a visual system capacity according to claim 14.
